# EUROPÄISCHE PATENTANMELDUNG

(11) **EP 4 361 835 A1**
(43) Veröffentlichungstag der Anmeldung: **01.05.2024**
(21) Anmeldenummer: 23206830.4
(22) Anmeldetag: 30.10.2023
(51) Int. Cl.: G06F 16/21, G06F 3/00, G06F 16/23, G06F 16/28

(54) **VERFAHREN ZUM SCHREIBEN VON DATENSÄTZEN IN EINE RELATIONALE DATENBANK**

(30) Priorität: 31.10.2022 CH 12852022
(71) Anmelder: Basics Software Solutions AG, 8832 Wollerau (CH)
(72) Erfinder: Gossweiler, Martin, 8832 Wollerau (CH)
(74) Vertreter: E. Blum & Co. AG

(57) **Zusammenfassung**

Ein Verfahren zum Schreiben von Datensätzen (DS) in eine relationale Datenbank (13), bei der jeder Datensatz (DS) mindestens zwei Attribute (A) enthält, umfassend die Schritte: Bereitstellen oder Erzeugen von mehreren Relationen (R) in der Datenbank (13) enthaltend je mindestens ein Attribut (A); Festlegen mindestens eines Wertes für mindestens ein Attribut (A1) als Kriterium zum Filtern der Datensätze (DS) nach diesem Attributwert; Computergestütztes Ausgeben von nach diesem Attributwert gefilterten Datensätzen (DS) in einer Ausgabeansicht (AS) und Vorsehen oder auf Anforderung Erzeugen eines Eingabefeldes (EF) in der Ausgabeansicht (AS) zur Eingabe eines Wertes für ein anderes Attribut (A4); In Erwiderung auf die Eingabe eines Wertes in das Eingabefeld (EF) der Ausgabeansicht (AS) computergestütztes Erstellen eines vollständigen Datensatzes (DS4) enthaltend den als Filterkriterium festgelegten Wert für das zugehörige Attribut (A1) und den eingegebenen Wert für das andere Attribut (A4), und Speichern des erstellten Datensatzes (DS4) in der relationalen Datenbank (13).

## Beschreibung

### Gebiet der Erfindung

Die vorliegende Erfindung betrifft ein Verfahren zum Schreiben von Datensätzen in eine relationale Datenbank. Sie betrifft weiter ein Computersystem sowie ein Computerprogramm.

### Hintergrund der Erfindung

Das Schreiben von Datensätzen in eine relationale Datenbank ist mit viel Aufwand verbunden. Besteht ein Datensatz aus x Attributen, so sind für jeden neu zu erstellenden Datensatz durch den Nutzer x Eingaben zu tätigen.

### Darstellung der Erfindung

Es ist insofern Aufgabe der vorliegenden Erfindung, ein Verfahren zum Schreiben von Datensätzen in eine relationale Datenbank vorzusehen, welches computergestützt effizienter erfolgt.

Diese Aufgabe wird durch ein Verfahren nach Anspruch 1 gelöst. In diesem Verfahren wird eine relationale Datenbank mit mehreren Relationen entweder erstellt oder bereitgestellt. Die grundlegende Struktur der Datenbank ist bereits vorhanden oder wird in einem ersten Schritt generiert. Vorzugsweise ist die relationale Datenbank bereits mit einigen Datensätzen beschrieben. Dies ist aber nicht zwingend notwendig. Im Folgenden wird eine Anzeige von allenfalls bereits existierenden Datensätzen vorzugsweise durch den Nutzer getriggert. Die Anzeige erfolgt in einer Ausgabeansicht, welche vorzugsweise durch den Nutzer ausgewählt und in einer bevorzugten Weiterbildung sogar konfiguriert werden kann, ersteres etwa durch Auswahl einer von mehreren vordefinierten und vom Computersystem vorgeschlagenen Ausgabeansichten, letzteres z.B. mit Hilfe durch einen computergestützten Assistenten. Alternativ kann aber die Anzeigeansicht auch durch das System / die Software festgelegt sein, bevorzugt als Matrixansicht.

Jedenfalls ist für die Anzeige der gewünschten Datensätze zunächst ein Filterkriterium festzulegen. Dies bedeutet, dass in der Ausgabeansicht nicht alle Datensätze angezeigt werden sondern nurdiejenigen, die einer Filterbedingung genügen. Datensätze, und bevorzugt eine Primärrelation der relationalen Datenbank weisen x Attribute auf, bevorzugt zwei oder mehr Attribute, bevorzugt vier oder mehr Attribute. Es kann vorliegend nach zumindest einem Attribut gefiltert werden. Wird das Filterattribut auf einen bestimmten Wert gesetzt, so werden im Folgenden nur Datensätze aus der Menge der gespeicherten Datensätze in der Ausgabeansicht angezeigt, welche das Filterkriterium erfüllen. In einer Weiterbildung dient ein einziges Attribut als Filterkriterium. In einer anderen Weiterbildung dienen zwei Attribute als Filterkriterien. Es kann aber auch nach noch mehr Attributen gefiltert werden. In einer Weiterbildung kann der Nutzer den Wert des als Filter dienenden Attributs festlegen, z.B. durch Auswahl aus den aus einer beschränkten Menge von zugelassenen Werten des betreffenden Attributs, welche zugelassenen Werte dem Nutzer vom System vorgeschlagen werden. In einer anderen Weiterbildung kann der Nutzer nicht nur den Wert eines Attributs als Filterkriterium festlegen, sondern auch das Attribut welches als Filter dienen soll. Auch hier bietet das System vorzugsweise Unterstützung dahingehend an, dass der Nutzer nur die existierenden und / oder die als Filter zugelassenen Attribute zur Auswahl stellt. Dies erfolgt mittels eines geeigneten GUIs.

Ist/sind das / die Filter festgelegt, vorzugsweise mittels Nutzerinteraktion, so erfolgt als Reaktion darauf das Filtern der existierenden Datensätze nach den Filterkriterien sowie die Ausgabe der gefilterten Datensätze in der Ausgabeansicht. Typischerweise werden für die gefilterten Datensätze nur die Werte der verbleibenden Attribute angezeigt, also der Attribute ohne das Filterattribut. Der als Filter dienende Attributwert kann an irgendeiner Stelle in der Ausgabeansicht angezeigt werden und wird jedenfalls zumindest temporär gespeichert, da er nachfolgend noch benötigt wird.

Die so gefilterten Datensätze werden also computergestützt ausgegeben in einer vordefinierten Ausgabeansicht, bevorzug auf dem Display eines Computers des Nutzers. Besonders ist, dass die Ausgabeansicht nicht rein passiver Natur ist, also nur die dem Filterkriterium genügenden Datensätze anzeigt. Vielmehr weist die Ausgabeansicht auch Editierfunktion in Form von mindestens einem Eingabefeld auf, vorzugsweise mehreren Eingabefelder. Eine Anzahl von Eingabefeldern, welche der Eingabe eines Datensatzes dienen, wird nachfolgend auch Eingabemaske genannt. Ein Eingabefeld / Eingabefelder oder eine Eingabemaske wird computergestützt automatisch beim Erzeugen der Anzeigeansicht erstellt und angezeigt. Alternativ kann auch erst eine Nutzereingabe, beispielsweise das Drücken eines Buttons, das Eingabefeld / die Eingabemaske in der Ausgabeansicht erzeugen. Ein Eingabefeld dient der Eingabe eines Wertes für eines der Attribute. Mehrere Eingabefelder für denselben Datensatz dienen der Eingabe von Werten für mehrere Attribute.

In der Ausgabeansicht kann festgelegt sein, dass das Eingabefeld für ein Attribut zu einem Wert eines anderen Attributs oder sogar zu den Werten von mehreren anderen Attributen zugeordnet ist. Ist die Ausgabeansicht beispielsweise eine Matrixansicht mit Reihen und Spalten, und werden etwa die Reihen gebildet durch Werte eines Attributs, die Spalten durch die Werte eines anderen Attributs, und repräsentieren die Zellen der Matrixansicht ein weiteres Attribut, so hat die Eingabe eines Wertes in eine als Eingabefeld gekennzeichnete Zelle vorzugsweise eine automatische Zuordnung zur zugehörigen Spalte und zur Reihe und damit zu den Werten zweier weiterer Attribute zur Folge.

Als Reaktion auf die Eingabe eines Wertes durch den Nutzer (gleichbedeutend mit der Selektion durch den Nutzer aus vorgegebenen möglichen Eingabewerten) in zumindest ein Eingabefeld der Ausgabeansicht, wird computergestützt, also automatisiert ein neuer Datensatz ermittelt und angelegt. Dieser neue Datensatz weist zumindest den eingegebenen Wert für das zugehörige Attribut und den als Filterkriterium festgelegten Wert für das zugehörige Attribut auf. Erstellen des vollständigen Datensatzes enthaltend zusätzlich Wert/e von mindestens einem weiteren Attribut. Insbesondere, wenn die konkrete Ausgabeansicht eine Zuordnung des eingegebenen Wertes auch zu weiteren Attributen trifft, so vervollständigen diese Attributwerte den Datensatz. Der so erstellte Datensatz wird in der relationalen Datenbank gespeichert.

Besteht ein Datensatz in einer relationalen Datenbank also aus x Attributen mit x grösser als Eins, und bevorzugt x grösser als drei, so muss ein Nutzer zum Erstellen eines neuen Datensatzes nicht die Werte für alle x Attribute eingeben, sondern maximal fürx-1 Attribute, bevorzugt fürx-2 oder x-3 Attribute, am meisten bevorzugt nur für ein einziges Attribut. Das Setzen des Filters wird nicht als Eingabe eines Attributs gewertet. Generell kann also gesagt werden, dass infolge des vorgängigen Filterns von Datensätzen und / oder der Zuordnung von Eingabefeldern in der Ausgabeansicht zu Werten von anderen Attributen sich die Anzahl der zu tätigenden Einträge durch den Nutzer verringert zumindest um die Anzahl der gefilterten Attribute und die Anzahl der Eingabefelder zu zugeordneten Werten anderer Attribute, da diese computergestützt den eingegebenen Attributwerte/n zugeordnet werden und damit den Datensatz automatisiert vervollständigen.

Das Verfahren und das zugehörige Computerprogramm geben also dem Benutzer die Möglichkeit einfach und intuitiv Datensätze für eine relationale Datenbank zu erstellen, und zwar mittels eines "inline-edits" in einer Ausgabeansicht, welche Ausgabeansichten konventionell nur "read only" Eigenschaft aufweisen, d.h. nur die Datensätze darstellen, nicht aber die Möglichkeiten zum Editieren oder Erstellen von Datensätzen haben. Hierbei wird nicht nur der Eingabeaufwand verringert und Zeit bei der Bewirtschaftung einer relationalen Datenbank eingespart. Auch die Fehleranfälligkeit wird reduziert, da der Nutzer nicht alle Attribute eines Datensatzes eingeben muss, und damit Tippfehler vermieden werden.

In vorteilhaften Weiterbildungen der Erfindung kann aber nicht nur ein neuer Datensatz mit vorgenanntem Mechanismus erstellt werden. Es können auch existierende Datensätze geändert oder gelöscht werden. Hierbei ist es erforderlich, dass in der Ausgabeansicht die normalerweise als "read-only" dargestellten Attributwerte der gefilterten Datensätze ebenfalls als Eingabefelder editierbar ausgestaltet sind und damit durch den Nutzer gelöscht werden können und / oder im Wert geändert werden können. Ein Löschen hat dann analog zum Schreiben die Folge, dass der Datensatz computergestützt gelöscht wird. Es kann etwa aus dem Wert des Attributs vor seinem Löschen, dem als Filter genutzten Attributwert, und allenfalls den Werten der weiteren infolge der Ausgabeansicht zugeordneten Attribute der Datensatz und daraus sein Primärschlüsselwertmittels ermittelt werden. Letzter kann dann in der Datenbank gesucht, und der zugehörige Datensatz gelöscht werden. Bei einer Äenderung eines Wertes kann auf gleiche Weise der zugehörige Datensatz ermittelt werden, das betreffende Attribut in seinem Wert geändert und gespeichert werden, und der neue Primärschlüsselwert berechnet und zugeordnet abgespeichert werden. Gleich wie bei einer Aenderung eines Wertes kann bei einem Löschen dieses Wertes nicht der zugehörige Datensatz vollständig aus der Datenbank entfernt werden. Alternativ kann auch der betreffende Wert auf "Null" gesetzt werden, nach dem gleichen Mechanismus wie bei einer Aenderung.

In einer vorteilhaften Weiterbildung der Erfindung wird ein so neu erstellter Datensatz aber nur in der relationalen Datenbank gespeichert, falls ein Vergleich mit in der relationalen Datenbank bereits gespeicherten Datensätzen keine vollständige oder partielle Identität ergibt. Andernfalls wird dem Nutzer bevorzugt über die Ausgabeansicht mitgeteilt, dass der auf Basis des eingegebenen Wertes erstellte Datensatz nicht in der relationalen Datenbank gespeichert werden kann, z.B. aufgrund einer vollständigen oder partiellen Identität mit einem bereits gespeicherten Datensatz.

Die Notwendigkeit einer Ueberprüfung auf partielle oder vollständige Identität kann sich aus der Funktion der konkreten Datenbank ergeben. Bevorzugt weist die Datenbank als relationale Datenbank ja Relationen auf, von denen eine Relation eine Primärrelation ist mit mindestens zwei Attributen. Weitere Relationen können vorhanden sein, und auch Fremdschlüssel enthalten. Datensätze enthalten vorzugsweise alle in der Primärrelation festgelegte Attribute, und sind durch ein Tupel dieser Attributwerte repräsentiert. Bevorzugt weist die Primärrelation neben den Attributen auch einen Primärschlüssel auf. Dieser soll jeden Datensatz identifizieren. Insofern ist es bevorzugt, dass dieser Primärschlüssel zur vollständigen oder partiellen Ueberprüfung des neu erstellten Datensatzes mit bereits gespeicherten Datensätzen verwendet wird.

Beispielhaft ist der Primärschlüssel ein kombinierter Primärschlüssel über eine Anzahl der Attribute der Primärrelation. Hierdurch wird eineindeutige Identität von Datensätzen sichergestellt, falls der Vergleich einen Treffer liefert. In einer vorteilhaften Weiterbildung ist der Primärschlüssel ebenfalls ein kombinierter Primärschlüssel, allerdings über eine Untermenge von Attributen der Datensätze. Dies sei an einem Beispiel erläutert: Die Attribute der Primärrelation seien Datum, Projekt, Mitarbeiten und Arbeitszeit. Die Datensätze sollen also die Arbeitseinsätze von Mitarbeitern in einem Unternehmen anzeigen. Der Primärschlüssel wird nun vorzugsweise gebildet über die Attribute Datum, Projekt und Mitarbeiter, also eine Untermenge der Attribute, da das Attribut Arbeitszeit nicht in den Primärschlüssel aufgenommen ist. Mit einem solchen Primärschlüssel kann also auf Teilidentität überprüft werden dahingehend, dass nur ein Datensatz pro Mitarbeiter, Projekt und Tag erlaubt ist. Der Mitarbeiter kann am selben Tag durchaus an anderen Projekten arbeiten, sodass hierfür ein weiterer Datensatz generiert werden kann. Nicht zugelassen sind jedoch zwei Datensätze von den Mitarbeiter für das gleiche Projekt am selben Tag.

Sowohl in Bezug auf das Filtern, wie auch in Bezug auf die Ausgabeansichten, und auch in Primärschlüsselfunktion ist es höchst bevorzugt, die Attribute eines Datensatzes bzw. der Primärrelation so festzulegen, dass sowohl die Identitätsüberprüfung eindeutige Ergebnisse liefert, als auch die Ausgabeansicht mit der Eingabefunktionalität eindeutige Zuordnungen im beschriebenen Erstellen neuer Datensätze sicherstellt, und auch der Primärschlüssel eindeutige Werte liefert. So soll im Rahmen dieser Weiterbildung der Erfindung zwischen einem Datentyp mit diskreten Merkmalen und einem mit nicht diskreten Markmalen unterschieden werden. Als Datentyp mit diskreten Merkmalen wird ein Datentyp definiert, bei dem das Attribut nur eine abzählbare Menge aufweist, welche jedoch unendlich sein kann. Bei einem Datentyp mit nicht-diskreten bzw. stetigen Merkmalen sind diese Restriktionen nicht erfüllt. Nachfolgend wird ein Datentyp mit diskreten Merkmalen als diskreter Datentyp bezeichnet. Ein Attribut vom diskreten Datentyp ist bevorzugt im Wege einer Relation definiert, als eindeutig, abzählbare und zusätzlich endliche Wertemenge. In obigem Beispiel z.B. eine Liste aller Mitarbeiter des Unternehmens, oder eine Liste aller aktuellen Projekte des Unternehmens. An diesen Beispielen zeigt sich, dass diese Liste natürlich Text enthält, und Text als Datentyp mit "quasi-stetigen" Merkmalen definiert werden kann. Durch die Restriktion der Relation wird aber aus Text / String ein diskreter Datentyp, da eine Relation eine genau definierte Anzahl von Attributwerten und deren Schreibweise eindeutig festlegt. Vorliegend werden auch Ganzzahlen, Bool'sche Zahlen, Datum etc. als Attribute vom diskreten Datentyp angesehen. Andererseits sind beispielsweise Gleitkommazahlen, Brüche oder freier Text / String vom stetigen bzw. "quasi-stetigen" Datentyp, d.h. sie können unendlich viele Ausprägungen annehmen. Nachfolgend wird ein Datentyp mit stetigen oder quasi-stetigen Merkmalen auch als nicht-diskreter Datentyp bezeichnet. In obigen Beispiel ist beispielsweise das Attribut Arbeitszeit als Gleitkommazahl und damit vom nicht-diskreten Datentyp angelegt.

Insofern ist es bevorzugt, dass der Primärschlüssel, falls als kombinierter Schlüssel implementiert, ausschliesslich Attribute vom diskreten Datentyp berücksichtigt. Auch für Spalten und / oder Reihen definierende Attribute in einer Ausgabeansicht ist es bevorzugt, dass ausschliesslich Attribute vom diskreten Datentyp benutzt / hierfür selektiert werden. Auch bei der Implementierung der Filterfunktion werden bevorzugt nur ein oder mehrere Attribute vom diskreten Datentyp zugelassen.

Vorzugsweise weist nun eine Primärrelation, und bevorzugt ein Datensatz mindestens je ein Attribut vom diskreten Datentyp und ein Attribut vom nicht-diskreten Datentyp auf. Bevorzugt sind jedoch mehrere Attribute der Primärrelation bzw. eines Datensatzes vom diskreten Datentyp aus folgenden Überlegungen: Der oben beschriebene Filter soll bevorzugt nach einem Attributwert suchen, der diskret, also vordefiniert und eindeutig ist, damit ein sinnvolles Filterkriterium erfüllt ist. Auch hinsichtlich der Ausgabeansicht ist es bevorzugt, in einer Ausgabeansicht mit Reihen und/oder Spalten für die Benennung dieser Reihen und / oder Spalten Attributwerte vom diskreten Datentyp zu verwenden, um eine eindeutige Zuordnung von Eingabewerten über die Eingabefelder zu diesen als Spalten / Zeilen dienenden Attributwerten erhalten. Zellen in einer Matrixansicht, und / oder Eingabefelder können dagegen sowohl vom diskreten als auch vom nicht-diskreten Datentyp sein. Auch für den Primärschlüssle, und bevorzugt für den kombinierten Primärschlüssel, ist es vorteilhaft nur Attribute vom diskreten Datentyp heranzuziehen.

Abzielend auf die Matrixansicht als bevorzugte Ausgabeansicht sind also mindestens oder genau drei Attribute vom diskreten Datentyp vorgesehen, und mindestens ein oder genau ein Attribut vom nicht-diskreten Datentyp. Bevorzugt weist die Primärrelation mindestens vier Attribute auf, wobei genau ein Attribut der Primärrelation Werte des nicht-diskreten Datentyps erfordert und alle anderen Attribute Werte des diskreten Datentyps erfordern. Insbesondere bei der Matrixansicht als bevorzugte sind neben dem als Filter dienenden Attribut vom diskreten Datentyp ein weiteres Attribut vom diskreten Datentyp, dessen Werte die Spalten der Matrix definieren, und ein drittes Attribut vom diskreten Datentyp, dessen Werte die Zeilen der Matrix definieren. Werte eines vierten Attributs vom nicht-diskreten Datentyp bevölkern die Zellen der Matrix und sind damit auch dem die Spalte definierenden Wert dem die Zeile definierenden Wert aus dem Datensatz zugeordnet. Vorzugsweise dienen alle Zellen der Matrix als Eingabefelder, die nicht mit einem Wert des Attributs mit dem nicht-diskreten Datentyp belegt sind.

In einer bevorzugten Weiterbildung der Erfindung ist die Ausgabeansicht nicht festgelegt. Stattdessen wird dem Nutzer ein graphischer Editor in Form eines GUI (Graphical User Interface) angeboten, mit dessen Hilfe er die Ausgabeansicht definieren kann. Zum Beispiel kann zunächst eine Grundform einer Ausgabeansicht ausgewählt werden, z.B. eine übliche Tabellenansicht oder eine Matrixansicht. Ist die Matrix-Ansicht ausgewählt, erscheint eine Liste aller Attribute der Tabelle und der Nutzer kann diese im Sinne eines Drag-and-Drop zu den Komponenten des Ausgabeansicht, z.B. den Spalten oder Reihen ziehen. Es ist bevorzugt, dass hierbei nur Attribute vom diskreten Datentyp angeboten werden, welche Komponenten der Ausgabeansicht bestimmen sollen. Die Software des Ausgabeansicht-Editors ordnet dann die Werte des betreffenden Attributs computergestützt entsprechend z.B. als Spalten an. Damit wird insbesondere die Flexibilität für den Nutzer erhöht. Er kann seine bevorzugte Ausgabeansicht auswählen, oder auch die übersichtlichste Ausgabeansicht abhängig von der Anzahl der Attribute auswählen. Der Nutzer kann eine Matrix, Tabellen, Felder, Verknüpfungen und Ansichten erstellen. Jede Tabelle kann keine oder mehrere Ansichten haben. Eine Ansicht kann keine oder mehrere Filter haben, keine oder mehrere Reihengruppen und keine oder mehrere Spaltengruppen. Die Erfindung soll es Benutzer erlauben einfach und intuitiv eine Ansicht zu erstellen, welche vom Konzept her einer Matrix entspricht und nicht nur einer Tabelle.

In der Matrixansicht können danach Zeilen- und Reihengruppen definiert werden. In dieser Reihengruppenansicht werden die gefilterten Datensätze gruppiert nach einem der Attribute in Reihengruppen angezeigt, d.h. untereinander, voneinander etwa mit etwas Abstand separiert. D.h., eine erste Reihengruppe enthält alle Datensätze, die einen ersten Wert des Attributs aufweisen. Eine zweite Reihengruppe enthält alle Datensätze, die einen zweiten Wert des Attributs ausweisen, und so fort. In dieser Ausgabeansicht können Eingabefelder oder Eingabemasken je Reihengruppe zugeordnet werden. Damit ist per se für eine Eingabe in einem Eingabefeld einer Reihengruppe auch der Wert des die Reihengruppe definierenden Attributs als Attributwert des neuen Datensatzes festgelegt.

Nach dem Definieren von Spaltengruppen werden die gefilterten Datensätze gruppiert nach einem der Attribute in Spaltengruppen angezeigt, d.h. nebeneinander, voneinander etwa mit etwas Abstand separiert. D.h., eine erste Spaltengruppe enthält alle Datensätze, die einen ersten Wert des Attributs aufweisen. Eine zweite Spaltengruppe enthält alle Datensätze, die einen zweiten Wert des Attributs ausweisen, und so fort. In dieser Ausgabeansicht können wiederum Eingabefelder oder Eingabemasken je Spaltengruppe zugeordnet werden. Damit ist per se für eine Eingabe in einem Eingabefeld einer Spaltengruppe auch der Wert des die Spaltengruppe definierenden Attributs als

Gemäss einem weiteren Aspekt der vorliegenden Erfindung enthält ein Computerprogamm Computerprogrammcode, welcher bei Ausführung auf einer Prozessoreinheit die folgenden Schritte zum Schreiben von Datensätzen mit mindestens zwei Attributen in eine relationale Datenbank mit Relationen enthaltend je mindestens ein Attribut durchführt: Empfangen eines Wertes für mindestens eines der Attribute als Kriterium zum Filtern der Datensätze nach diesem Attributwert; Filtern der gespeicherten Datensätze nach dem empfangenen Attributwert; Zusammenstellen der gefilterten Datensätze in einer Ausgabeansicht mit einem Eingabefeld zur Eingabe eines Wertes für ein anderes Attribut; In Erwiderung auf die Eingabe eines Wertes in das Eingabefeld der Ausgabeansicht Erstellen eines vollständigen Datensatzes enthaltend den als Filterkriterium festgelegten Wert für das zugehörige Attribut und den eingegebenen Wert für das andere Attribut, und Speichern des erstellten Datensatzes in der relationalen Datenbank.

Gemäss einem weiteren Aspekt der vorliegenden Erfindung umfasst ein Computersystem eine relationale Datenbank mit Relationen enthaltend je mindestens ein Attribut, eine Prozessoreinheit, und ein Computerprogramm nach dem vorhergehenden Aspekt

Weitere Ausgestaltungen der Erfindung sind Gegenstand der Unteransprüche. Die auf das Verfahren bezogenen Unteransprüche können sich in gleicherWeise auf die anderen Aspekt - Computerprogramm und Computersystem - beziehen und gilt auch für diese Anspruchskategorien als offenbart an.

### Kurze Beschreibung der Zeichnungen

Vorteile und Ausführungsbeispiele der Erfindung werden nachstehend unter Bezugnahme auf die Zeichnung näher erläutert.
- Fig. 1: zeigt ein Blockschaltbild eines Computersystems nach einem Ausführungsbeispiel der Erfindung;
- Fig. 2: zeigt ein Blockschaltbild eines Computersystems nach einem anderen Ausführungsbeispiel der Erfindung;
- Fig. 3: zeigt eine schematische Darstellung einer relationalen Datenbank zur Verwendung in einem Verfahren nach einem Ausführungsbeispiel der vorliegenden Erfindung;
- Fig. 4 bis 6: zeigen Beispiele von konkreten Relationen der relationalen Datenbank aus Figur 3;
- Fig. 7 bis 10: zeigen beispielhafte Ausgabeansichten für eine relationale Datenbank verwendet in einem Verfahren nach Ausführungsbeispielen der Erfindung;
- Fig. 11: zeigt ein Beispiel einer konkreten Relation nach Anwendung des Verfahrens mit Hilfe einer der Ausgabeansichten nach einer der Figuren 7 bis 10; und
- Figur 12: zeigt das GUI eines Editors zum Editieren einer Ausgabeansicht gemäss einer Weiterbildung der Erfindung.

### Detaillierte Figurenbeschreibung

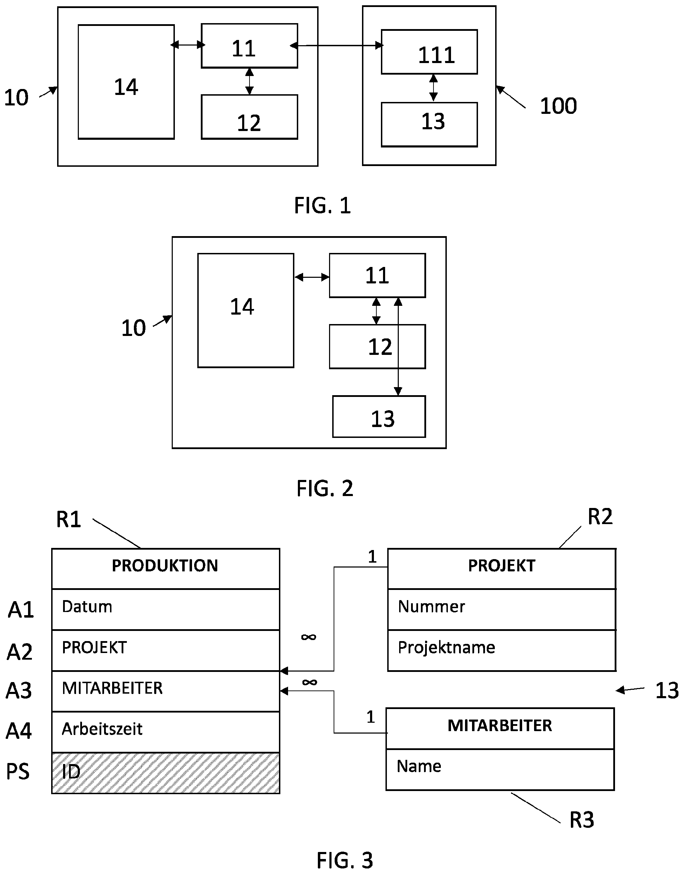

Fig. 1 zeigt ein Blockschaltbild eines Computersystems nach einem Ausführungsbeispiel der Erfindung. Das Computersystem weist dezentrale Komponenten auf wie einen Computer 10 und einen entfernt von dem Computer 10 angeordneten Server 100 auf, beispielsweise den Server 100 einer Cloud. Computer 10 und Server 100 sind kommunikativ miteinander verbunden, wie durch den Doppelpfeil angezeigt. Der Computer 10 enthält eine Prozessoreinheit 11, ein Display 14 und einen Speicher, in dem ein Computerprogramm 12 abgelegt ist, welches das erfindungsgemässe Verfahren durchführt, wenn es auf der Prozessoreinheit 11 ausgeführt wird. Auf dem Display 14 werden Ausgabeansichten wie im erfindungsgemässen Verfahren verwendet zur Anzeige gebracht, inklusive von Eingabefeldern oder Eingabemasken. Der Server 100 weist ebenfalls eine Prozessoreinheit 111 auf, sowie einen Speicher, in dem eine relationale Datenbank 13 abgelegt ist, welche gemäss dem erfindungsgemässen Verfahren bearbeitet, und insbesondere beschrieben wird.

Fig. 2 zeigt ein Blockschaltbild eines alternativen Computersystems nach einem Ausführungsbeispiel der Erfindung. Hierbei ist auch die relationale Datenbank 13 im Speicher des Computers 10 abgelegt. Dieses Computersystem ist also nicht dezentral verteilt, sondern lokal beim Nutzer implementiert.

Fig. 3 zeigt eine schematische Darstellung einer relationalen Datenbank zur Verwendung in einem Verfahren nach einem Ausführungsbeispiel der vorliegenden Erfindung. Die relationale Datenbank weist vorliegend drei Relationen R1 bis R3 auf. Selbstverständlich können weitaus mehr Relationen implementiert sein. Relationen einer relationalen Datenbank repräsentieren bekanntlich Tabellen, welche miteinander über Beziehungen verknüpfbar sind. Vorliegend weist die erste Relation R1, auch Primärrelation R1 genannt, vier Felder A1 bis A4 auf, auch Attribute genannt. Diese Attribute sind A1 Datum, A2 Projekt, A3 Mitarbeiter und A4 Arbeitszeit. Der Name der Primärrelation R1 lautet Produktion und soll letztlich die projektzugehörigen Tätigkeiten in Stunden von Mitarbeitern eines Unternehmens pro Tag erfassen. Diese Primärrelation R1 umfasst also, wenn mit Einträgen beschrieben, eine Vielzahl von Datensätzen, ein jeder davon die projektbezogene Tätigkeit eines Mitarbeiters pro Tag dokumentierend. Jeder Datensatz enthält vorliegend also Werte für jedes der Attribute A1 bis A4. Die Attribute A2 und A3 sind auch Fremdschlüssel genannt, da sie mit den weiteren Relationen R2 und R3 verknüpft sind.

Die Primärrelation R1 enthält weiterhin ein Feld (schraffiert) namens Primärschlüssel PS. Der Primärschlüssel PS dient der Identifizierung eines Datensatzes. Mit seiner Hilfe kann z.B. sichergestellt werden, dass die Primärrelation R1 keine zwei identischen Einträge aufweist. Der konkrete Wert des Primärschlüssels PS dient also als Identifier ID für einen Datensatz, welcher konkrete Identifier ID auch Primärschlüsselwert genannt wird. In Ausgabeansichten von Einträgen / Datensätzen der relationalen Datenbank werden die Primärschlüsselwerte typischerweise nicht angezeigt. Vorliegend wird der Primärschlüssel PS also auch nicht als Attribut angesehen. Der Primärschlüssel PS ist aber bevorzugt ein kombinierter Primärschlüssel, welcher sich aus Attributen zusammensetzt, vorliegend bevorzugt aus der Kombination der Attribute A1 bis A3. Dieser Primärschlüssel PS stellt damit sicher, dass ein Mitarbeiter an einem Tag an einem bestimmten Projekt nur einen einzigen Eintrag haben kann.

Die weiteren Relationen R2 "Projekt" und R3 "Mitarbeiter" enthalten Informationen über Projekte und Mitarbeiter. Beispielsweise sind in der Relation R3 die Namen aller Mitarbeiter erfasst, deren Tätigkeit mit Hilfe der relationalen Datenbank dokumentiert werden soll. Die durch den Pfeil angedeutete Beziehung der dritten Relation R3 zur Primärrelation R1 lässt das dritte Attribut A3 der Primärrelation R1 nur mit einem in der dritten Relation R3 festgelegten Eintrag beschreiben. Zwar ist der Datentyp des Attributs der dritten Relation R3 vordergründig Text, da jeder Mitarbeiter beispielsweise mit Vor- und Nachnamen erfasst wird. Allerdings repräsentieren die Einträge in R3 jedoch eine finite und genau definierte Menge an Werten bestehend aus vorgegebenem Namen, sodass der Datentyp als diskreter Datentyp aufgefasst wird. Ein diskreter Datentyp ist dadurch gekennzeichnet, dass er nur vorgegebene Werte aus einer endlichen Wertemenge einnehmen kann.

Gleiches gilt auch für die Relation R2. Diese weist zwei Attribute "Nummer" und "Projektname" auf. Auch diese beiden Attribute sind vom diskreten Datentyp, da vordefiniert und in der Wertemenge begrenzt. Jedem Projektname wird eine Projektnummer zugeordnet.

Die Konvention für die Attribute A2 und A3 der Primärrelation R1 lautet also, dass sie nur Werte aus den zugeordneten Relationen R2 und R3 einnehmen können.

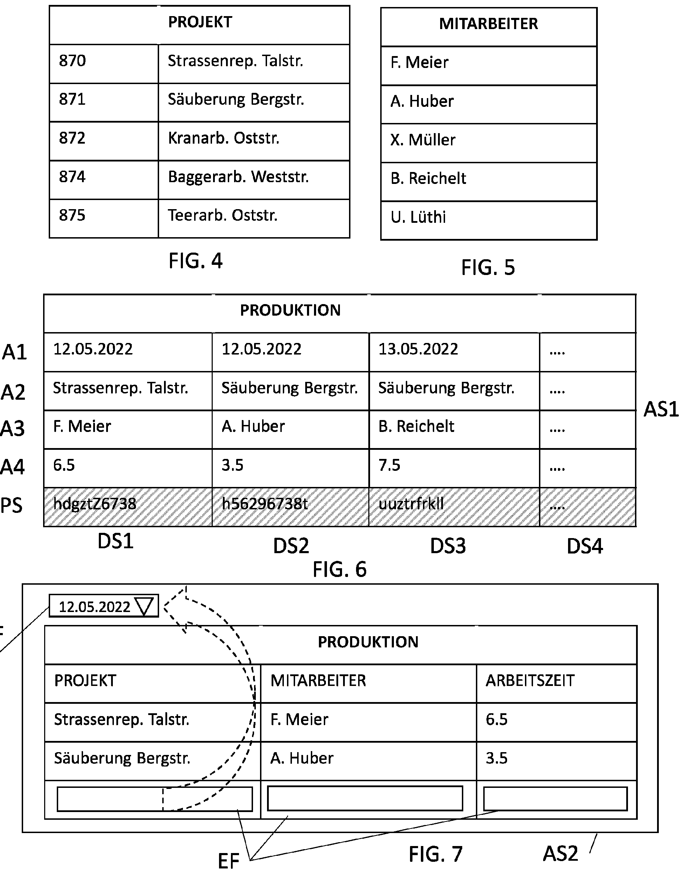

In den Fig. 4 bis 6 sind nun Beispiele von mit Werten belegten Relationen R2 (Figur 4), R3 (Figur 5) und R1 (Figur 6) der relationalen Datenbank aus Figur 3 gezeigt. Beispielhaft hat das Unternehmen, dessen Produktion / Arbeitsnachweis gezeigt und dokumentiert werden soll, fünf Mitarbeiter gemäss Relation R3 in Figur 5, und fünf (Arbeits-)Projekte / Einsätze der Mitarbeitenden gemäss Relation R2 in Figur 4. In Figur 6 ist dann eine beispielhafte konkrete Primärrelation R1 gezeigt, die drei Datensätze DS1 bis DS3 aufweist. Diese Datensätze DS1 bis DS3 zeigen die Einsätze von drei unterschiedlichen Mitarbeitern an zwei verschiedenen Tagen in zwei verschiedenen Projekten an. Es sind auch die den Datensätzen DS1 bis DS3 zugeordneten Werte des Primärschlüssels PS gezeigt. Ein vierter Datensatz DS4 ist stellvertretend gezeigt für eine Vielzahl weiterer Datensätze, welche typischerweise in einer solchen Datenbank vorhanden sind.

Grundsätzlich kann die konkret befüllte Primärrelation R1 auch ausgegeben werden, d.h. dem Nutzer auf dem Display 14 angezeigt werden. Die Relation aus Figur 6 kann also auch als Ausgabeansicht AS genutzt werden, jedoch ohne Primärschlüssel PS. Dies ist in Figur 6 angedeutet durch das Kürzel AS1 für eine erste Variante einer Ausgabeansicht AS. Diese Ausgabeansicht AS1 wird auch "Data Grid" genannt, da alle Attribute von allen Datensätzen angezeigt werden. Im konkreten Fall soll nun angenommen werden, dass die Datenbank nur die drei Datensätze DS1 bis DS3 enthält und diese in der Ausgabeansicht AS1 angezeigt werden. Die Ausgabeansicht AS1 kann dabei so konfiguriert sein, dass die als DS4 gezeigten Felder nun als Eingabefelder, kollektiv Eingabemaske genannt, genutzt werden können, wieder mit Ausnahme des Primärschlüsselfeldes, welches sich ja algorithmisch aus der Kombination der anderen Attribute A1 bis A3 ergibt. Vorliegend ist also ersichtlich, dass der Nutzer einen neuen Datensatz DS4 anlegen kann, indem er die vier Attribute A1 bis A4 in der Ausgabeansicht AS 1 ausfüllt, wodurch er einen neuen Datensatz DS4 eingibt, der dann in die relationale Datenbank geschrieben, d.h. gespeichert wird.

Fig. 7 zeigt nun eine weitere Ausgabeansicht AS2 für die Darstellung von relationalen Datensätzen der relationalen Datenbank. Hierbei werden allerdings nur nach einem konkreten Wert eines der Attribute - hier Attribut A1 "Datum" - gefilterte Datensätze angezeigt. Der Filter F kann über eine geeignete Eingabemaske, z.B. als Drop-Down-Menu oder als Auswahl aus einem eingeblendeten Kalender oder aber als händische Eingabe festgelegt werden. Die Eingabe muss sicherstellen, dass der Dateityp-Konvention für dieses Attribut A1 gefolgt wird. Im Beispiel wurde der Filter F durch den Nutzer auf den 12.05.2022 gesetzt. In der Ausgabeansicht AS2 gemäss Figur 7 werden also in den Zeilen nur diejenigen Datensätze angezeigt, welche dem Filterkriterium entsprechen, und auch nur mit den drei verbleibenden Attributen "Projekt", "Mitarbeiter" und "Arbeitszeit". Gemäss einer Weiterbildung der Erfindung wird nun in einer solchen Ausgabeansicht eine Eingabemaske generiert. Diese ist repräsentiert durch drei Eingabefelder EF, wie in Figur 7 dargestellt. Die Eingabefelder EF sind in Folge ihrer Anordnung dabei den Attributen A2, A3 und A4 zugeordnet. Vollzieht der Nutzer Einträge in diese drei Eingabefelder, so kann er einen neuen Datensatz DS4 generieren. Beim Erstellen des Datensatzes werden die eingegebenen Werte den Attributen A2 bis A4 zugeordnet. Das verbliebene Attribut A1 "Datum" wird computergestützt auf den Filterwert gesetzt. Dies wird durch den gestrichelten Pfeil symbolisiert. Der Wert 12.05.2022 für Attribut A1 vervollständigt also den neuen Datensatz DS4.

Ein Nutzer muss auf Basis dieser Ausgabeansicht AS2 also nur noch drei Werte händisch eingeben, um einen vollständigen neuen Datensatz zu erstellen im Vergleich zu vier Werten in der Ausgabeansicht AS1 aus Figur 6. Die Eingabe verkürzt sich also auf die Eingabe von drei Attributen anstelle von vier Attributen. Infolge des vorgängigen Filterns von Datensätzen und deren Anzeige in einer Ausgabeansicht, in welcher Ausgabeansicht eine Eingabemaske zugeordnet ist, verringert sich die Anzahl der Einträge durch den Nutzer zumindest um die Anzahl der gefilterten Attribute, da diese computergestützt den eingegebenen übrigen Attributwerten zugeordnet werden und damit den neuen Datensatz vervollständigen.

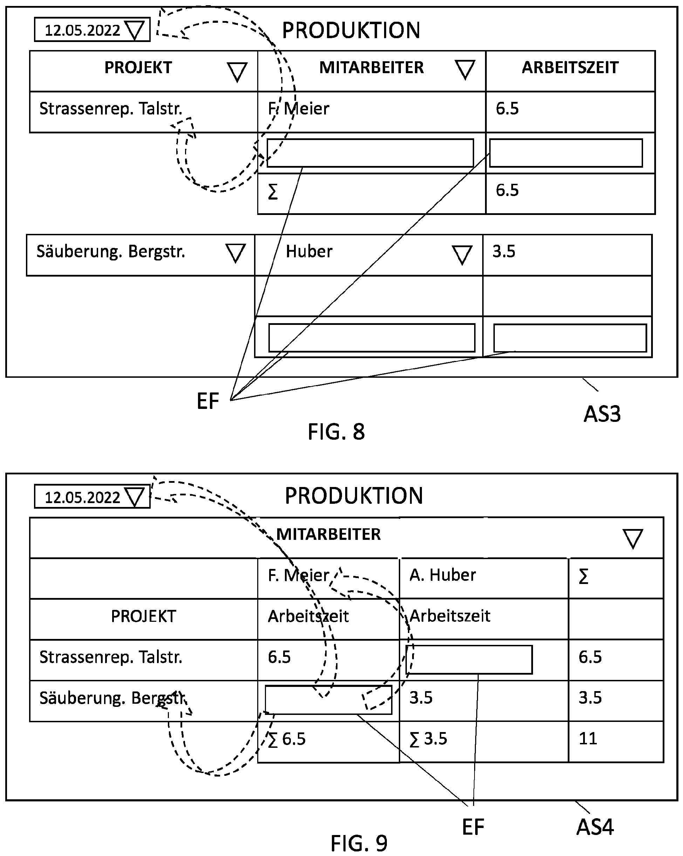

In der in Figur 8 gezeigten Ausgabeansicht AS3 ist eine sogenannte Zeilen- oder Reihengruppenansicht gewählt. Wiederum wird nach Attribut A1 gefiltert, vorliegend beispielhaft nach dem 12.05.2022. Die nach diesem Kriterium gefilterten Datensätze werden zum Attribut A2 "Projekt" gruppiert angezeigt. Die Darstellung resultiert also in einer nach dem Attribut A2 gruppierten zeilenweisen Darstellung der nach dem Attribut A1 gefilterten Datensätze. Die Ausgabeansicht AS3 sieht eine Eingabemaske aus zwei Eingabefeldern EF für jede Gruppe "Projekt" vor. Durch das Zuordnen der Eingabemasken zu einzelnen Projekten verringert sich die Eingabetätigkeit des Nutzers für das Erstellen eines neuen Datensatzes auf nur noch auf zwei Attribute A3 und A4, als Mitarbeiter und Arbeitszeit. Gibt der Nutzer also in einer der Eingabemasken, z.B. derjenigen zum Projekt "Strassenrep. Talstr.", einen Mitarbeiter aus Relation R3 - realisiert z.B. aus einem Pull-Down-Menü - sowie einen Stundenwert ein, so wird der neue Datensatz komplettiert durch den als Filterwert "12.05.2022" für das Attribut A1. Die gestrichelten Pfeile wiederum deuten an, welche Attributwerte (A1 und A2) computergestützt woher geholt werden.

Figur 9 zeigt eine weitere Ausgabeansicht AS4, welche eine Matrix-Ansicht ist. Wiederum werden die Datensätze vorgängig nach Attribut A1 gefiltert, vorliegend beispielhaft wiederum nach dem 12.05.2022. Die nach diesem Kriterium gefilterten Datensätze werden nun angezeigt als Matrix mit einem Attribut als Spalten, hier das Attribut A3 "Mitarbeiter" und einem anderen Attribut als Zeilen, hier das Attribut A2 "Projekt". Hier definieren also die einzelnen Werte des Attributs A3 die Spalten, die einzelnen Werte des Attributs A2 die Zeilen. Vorliegend ist implementiert, dass nur solche Mitarbeiter und Projekte Spalten und Zeilen definieren, welche bereits in den gefilterten Datensätzen aufgefunden wurden. In einer anderen Variante, definieren alle verfügbaren / definierten Mitarbeiter und Projekte aus den Relationen R2 und R3 jeweils Spalten und Zeilen. Letztere Variante ist optimiert auf die Eingabe von neuen Datensätzen, benötigt aber ein grösseres Layout in der Ausgabeansicht AS4. Dank der Möglichkeit von Hinzufügen von Reihen- und Spaltengruppen, welche mittels einem Klick erweitert bzw. reduziert werden können, kann nur der Teil der Matrix angezeigt werden, welche für die Eingabe der Daten gerade relevant ist. Zum Beispiel könnten Mitarbeiter noch in Teams gruppiert, und Projekte in Kostenstellen oder nach aktiven Projekten gruppiert werden.

Aufgrund der Matrixdarstellung sind die Zellen der Matrix der Ausgabeansicht AS4 dem Attribut A4 "Arbeitszeit" zugeordnet. Diese Ausgabeansicht AS4 sieht nun ein Eingabefeld EF für alle freien Matrixzellen vor. Die möglichen Eingabefelder EF sind durch in Figur 9 wiederum durch Rahmen gekennzeichnet. Durch die ausgabebedingte Zuordnung eines Eingabefeldes EF in der Ausgabeansicht AS4 sowohl zu einzelnen Projekten als auch zu einzelnen Mitarbeitern verringert sich die Eingabetätigkeit des Nutzers für das Erstellen eines neuen Datensatzes nur noch auf ein einziges Attribut A4, das ist die Arbeitszeit. Gibt der Nutzer also in eines der Eingabefelder, z.B. dem F. Meier zugeordneten Eingabefeld EF, einen Arbeitszeitwert ein, so wird computergestützt der neue Datensatz ermittelt wie folgt: A4 gemäss Eingabe, A1 aus dem Filter, A2 und A3 durch die Zuordnung des Eingabefeldes EF zu einem konkreten Mitarbeiter und einem konkreten Projekt. Die gestrichelten Pfeile deuten wiederum an, welche Attributwerte (A1, A2 und A3) computergestützt woher geholt werden.

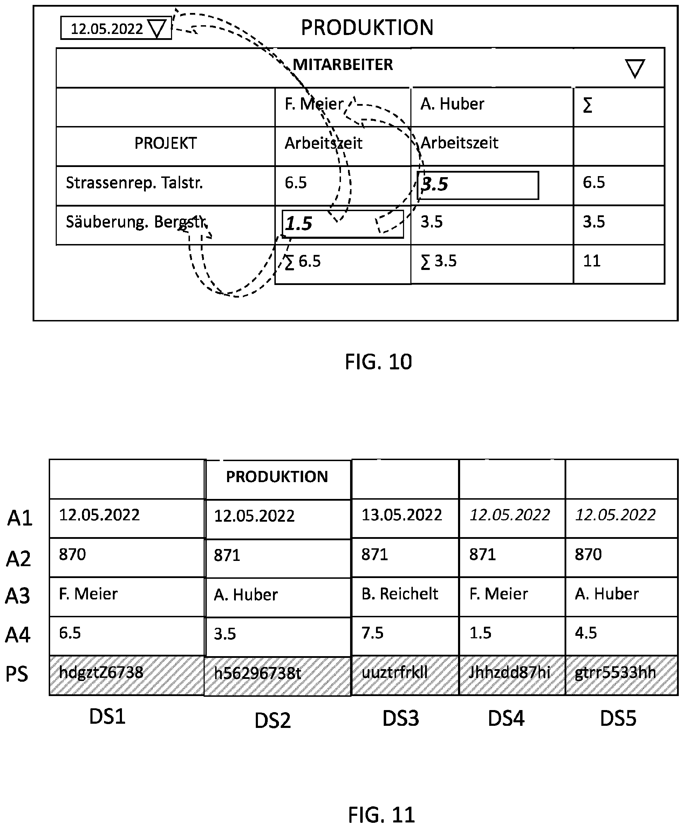

Figur 10 zeigt beispielhaft das Erstellen von zwei neuen Datensätzen in der Ausgabeansicht AS4 aus Figur 9. In die beiden Eingabefelder werden vom Nutzer zwei Werte 1.5 und 3.5 als Arbeitszeiten eingegeben. Damit werden zwei neue Datensätze generiert und wie oben zu Figur 9 beschrieben computergestützt vervollständigt. Der Zeitpunkt des Erstellens eines Datensatzes kann beispielsweise durch das Drücken der Enter-Taste nach der manuellen Eingabe in das Eingabefeld festgelegt werden. Auch zusätzliche Aktionen können durch die Eingabe / die Enter-Taste ausgelöst werden: Die Summenfelder in der Ausgabeansicht AS4 werden bevorzugt dann ebenfalls aktualisiert.

Figur 11 zeigt die in der Ausgabeeinsicht AS4 aus Figur 10 initiierte Erstellung zweier neuer Datensätze in der Primärrelation R1: Die Datensätze DS4 und DS5 wurden durch die Eingabe nur jeweils eines einzigen Attributwertes für das Attribut A4 automatisiert generiert und ergänzen die bisherigen Datensätze DS1 bis DS3. Dabei muss der Nutzer für das Erstellen zweier neuer Datensätze DS4 und DS5 bei vier Attributen nicht etwa acht Eingabefelder ausfüllen oder bedienen, sondern nur deren zwei.

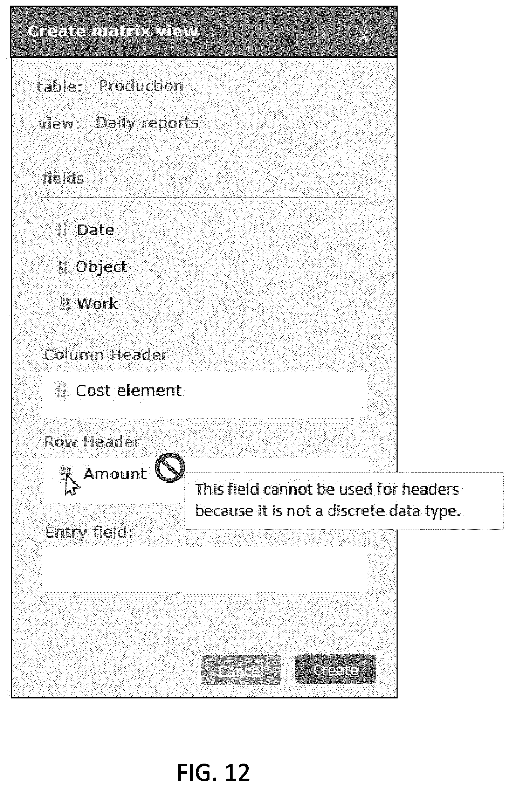

Figur 12 zeigt das GUI eines Editors zum Editieren einer Ausgabeansicht. In diesem Fall ist die Ausgabeansicht bereits als Matrixansicht festgelegt. Als "fields" sind Attribute der Datensätze bzw. der Primärrelation gelistet. Die Matrixansicht gibt vor, dass Spalten, Reihen und Zellen zu belegen sind. In der Algorithmik des Editors ist dann beispielsweise festgelegt, dass die Spalten und Reihen ausschliesslich mit Attributen vom diskreten Datentyp zu belegen sind. Im vorliegenden Fall versucht der Nutzer, die Reihen der Matrix-ansicht mit dem Attribut "Amount" zu belegen, welches Attribut beispielsweise eine Gleitkommazahl, also ein nicht-diskreter Datentyp ist. Insofern wird dem Nutzer im GUI angezeigt, dass eine Belegung der Reihen mit diesem Attribut nicht möglich ist. Typischerweise ist in der Matrixansicht eine Belegung der Zellen mit einem Attribut vom nicht-diskreten Datentyp aber möglich, nur nicht eine Belegung der Reihen und Spalten, da eine finite Anzahl von Spalten und Reihen in der Matrixansicht erwünscht ist. Bei Darg-and-Drop-Aktionen des Nutzers werden die platzierten Attribute aus dem "field"-Menu entfernt, d.h. im Beispiel nach Figur 12 waren auch die Attribute "Cost Element" und "Amount" zuvor im "fields"-Menu gelistet.

## Patentansprüche

1. Verfahren zum Schreiben von Datensätzen (DS) in eine relationale Datenbank (13), bei der jeder Datensatz (DS) mindestens zwei Attribute (A) enthält, umfassend die Schritte:
Bereitstellen oder Erzeugen von mehreren Relationen (R) in der Datenbank (13) enthaltend je mindestens ein Attribut (A),
Festlegen mindestens eines Wertes für mindestens ein Attribut (A1) als Kriterium zum Filtern der Datensätze (DS) nach diesem Attributwert,
computergestütztes Ausgeben von nach diesem Attributwert gefilterten Datensätzen (DS) in einer Ausgabeansicht (AS) und Vorsehen oder auf Anforderung Erzeugen eines Eingabefeldes (EF) in der Ausgabeansicht (AS) zur Eingabe eines Wertes für ein anderes Attribut (A4),
in Erwiderung auf die Eingabe eines Wertes in das Eingabefeld (EF) der Ausgabeansicht (AS) computergestütztes Erstellen eines vollständigen Datensatzes (DS4) enthaltend den als Filterkriterium festgelegten Wert für das zugehörige Attribut (A1) und den eingegebenen Wert für das andere Attribut (A4), und Speichern des erstellten Datensatzes (DS4) in der relationalen Datenbank (13).

2. Verfahren nach Anspruch 1, umfassend
Erstellen des vollständigen Datensatzes (DS4) enthaltend zusätzlich Wert/e von mindestens einem weiteren Attribut (A2,A3), das sich aufgrund der Anordnung des Eingabefeldes (EF) in der Ausgabeansicht (AS) als zum eingegebenen Wert zugehörig ergibt.

3. Verfahren nach Anspruch 1 oder Anspruch 2, umfassend
nach dem Erstellen des vollständigen Datensatzes (DS4) Vergleichen des erstellten Datensatzes (DS4) mit den in der relationalen Datenbank (13) gespeicherten Datensätzen (DS1-DS3), und
Speichern des erstellten Datensatzes (DS4) in der relationalen Datenbank (13) nur für den Fall, dass der Vergleich keinen in der Datenbank (13) gespeicherten vorhandenen identischen Datensatz identifiziert, andernfalls Anzeigen in der Ausgabeansicht (AS), dass der auf Basis des eingegebenen Wertes erstellte Datensatz (DS4) nicht in der relationalen Datenbank (13) gespeichert wird.

4. Verfahren nach einem der vorhergehenden Ansprüche,
bei dem eine der Relationen (R) eine Primärrelation (R1) mit mindestens zwei Attributen (A) ist,
bei dem ein Tupel der Primärrelation (R1) einen Datensatz (DS) repräsentiert,
bei dem die Primärrelation (R1) zusätzlich zu den mindestens zwei Attributen (A) einen Primärschlüssel (PS) aufweist, und je ein Primärschlüsselwert den zugehörigen Datensatz (DS) identifiziert.

5. Verfahren nach Anspruch 4,
bei dem mindestens ein Attribut (A1) der Primärrelation (R1) Werte eines diskreten Datentyps erfordert, welcher diskrete Datentyp bedingt, dass das Attribut (A1) ausschliesslich Werte aus einer endlichen, vordefinierten Wertemenge einnehmen kann, und
bei dem mindestens ein Attribut (A4) der Primärrelation (R1) Werte eines nicht-diskreten Datentyps erfordert, welcher nicht-diskrete Datentyp bedingt, dass das Attribut (A4) Werte aus einer nicht endlichen, nicht vordefinierten Wertemenge einnehmen kann.

6. Verfahren nach Anspruch 5,
bei dem das als Filterkriterium dienende Attribut (A1) ein Attribut (A1) mit Werten des diskreten Datentyps ist,
bei dem von den gefilterten Datensätzen (DS) zumindest die Attributwerte vom nicht-diskreten Datentyp in der Ausgabeansicht (AS) angezeigt werden.

7. Verfahren nach Anspruch 5,
bei dem die Primärrelation (R1) mindestens vier Attribute (A1-A4) aufweist,
bei dem genau ein Attribut (A4) der Primärrelation (R1) Werte des nicht-diskreten Datentyps erfordert,
bei dem alle anderen Attribute (A1-A3) der Primärrelation (R1) Werte des diskreten Datentyps erfordern.

8. Verfahren nach Anspruch 7,
bei dem das als Filterkriterium dienende Attribut (A1) ein Attribut (A1) mit Werten des diskreten Datentyps ist,
bei dem von den gefilterten Datensätzen (DS) die Attributwerte (A2,A3) vom nicht-diskreten Datentyp in der Ausgabeansicht (AS) angezeigt werden.

9. Verfahren nach Anspruch 8,
bei dem die Ausgabeansicht (AS) eine Matrixansicht (AS4) ist,
bei dem die Werte eines weiteren der Attribute (A2,A3) mit diskretem Datentyp die Spalten der Matrix in der Ausgabeansicht (AS4) definieren,
bei dem die Werte eines dritten der Attribute (A3) mit diskretem Datentyp die Zeilen der Matrix in der Ausgabeansicht (AS4) definieren, und
bei dem von den gefilterten Datensätzen (DS) die Attributwerte vom nicht-diskreten Datentyp in den Zellen der Matrix angezeigt werden zugeordnet zu dem die Spalte definierenden Wert aus dem Datensatz und zugeordnet aus dem die Zeile zugeordneten Wert aus dem Datensatz, und
und bei alle Zellen der Matrix als Eingabefelder (EF) dienen, die nicht mit einem Wert des Attributs (A4) mit dem nicht-diskreten Datentyps belegt sind.

10. Verfahren nach einem der vorhergehenden Ansprüche 5 bis 9,
bei dem der Primärschlüssel (R1) ein kombinierter Primärschlüssel ist aus Attributen (A1-A3) mit diskretem Datentyp ist,
bei dem ein Primärschlüsselwert für alle in der Datenbank (14) gespeicherten Datensätze (DS1-DS3) berechnet und in der Primärrelation (R1) gespeichert ist,
bei dem aus dem ermittelten Datensatz (DS4) ein Primärschlüsselwert aus den Attributen (A1-A3) mit diskretem Datentyp berechnet und mit den Primärschlüsselwerten der gespeicherten Datensätze (DS1-DS3) auf Identität verglichen wird, sodass bei festgestellter Identität der erstellte Datensatz (DS4) bereits identisch in der relationalen Datenbank (13) vorliegt.

11. Verfahren nach einem der vorhergehenden Ansprüche,
bei dem eine Grundform der Ausgabeansicht und / oder eine Belegung von Komponenten einer Ausgabeansicht mit Attributen mittels eines Editors editierbar ist.

12. Computerprogamm (12), enthaltend Computerprogrammcode, welches bei Ausführung auf einer Prozessoreinheit (11), die folgenden Schritte zum Schreiben von Datensätzen (DS4) mit mindestens zwei Attributen (A) in eine relationale Datenbank (13) mit Relationen (R) enthaltend je mindestens ein Attribut (A) durchführt:
Empfangen eines Wertes für mindestens eines der Attribute (A1) als Kriterium zum Filtern der Datensätze (DS) nach diesem Attributwert,
Filtern der gespeicherten Datensätze (DS1-DS3) nach dem empfangenen Attributwert,
Zusammenstellen der gefilterten Datensätze (DS) in einer Ausgabeansicht (AS) mit einem Eingabefeld (EF) zur Eingabe eines Wertes für ein anderes Attribut (A4),
in Erwiderung auf die Eingabe eines Wertes in das Eingabefeld (EF) der Ausgabeansicht (AS) Erstellen eines vollständigen Datensatzes (DS4) enthaltend den als Filterkriterium festgelegten Wert für das zugehörige Attribut (A1) und den eingegebenen Wert für das andere Attribut (A4), und Speichern des erstellten Datensatzes (DS4) in der relationalen Datenbank (13).

13. Computersystem, umfassend
eine relationale Datenbank (13) mit Relationen (R) enthaltend je mindestens ein Attribut (A),
eine Prozessoreinheit (11), und
ein Computerprogramm (12) nach Anspruch 12.
